# EUROPEAN PATENT APPLICATION

(11) **EP 4 780 114 A1**
(43) Date of publication of application: **22.07.2026**
(21) Application number: 24880043.5
(22) Date of filing: 14.10.2024
(51) Int. Cl.: H04W 72/50, H04W 72/0446, H04L 5/00, H04W 72/0453, H04L 1/08, H04W 4/70

(54) **APPARATUS AND METHOD FOR ALLOCATING RESOURCES**

(30) Priority: 18.10.2023 KR 20230139952; 22.11.2023 KR 20230163677
(71) Applicant: Samsung Electronics Co., Ltd., Suwon-si, Gyeonggi-do 16677 (KR)
(72) Inventor: SHIM, Seijoon, Suwon-si, Gyeonggi-do 16677 (KR); PARK, Byungjoon, Suwon-si, Gyeonggi-do 16677 (KR); HA, Kilsik, Suwon-si, Gyeonggi-do 16677 (KR)
(74) Representative: Gulde & Partner
(86) International application number: PCT/KR2024/015455
(87) International publication number: WO 2025/084706

(57) **Abstract**

According to an embodiment, an apparatus of a base station may comprise: a transceiver; a memory including instructions; and a processor. The instructions, when executed by the processor, may cause the apparatus to determine overlapping resource elements in which a plurality of first resource elements configured for a first radio access technology (RAT) and a plurality of second resource elements configured for a second RAT overlap. The instructions, when executed by the processor, may cause the apparatus to determine at least one resource element among the overlapping resource elements. The instructions, when executed by the processor, may cause the apparatus to allocate a downlink signal related to the second RAT to the remaining resource elements except for the at least one resource element among the plurality of second resource elements.

## Description

### [Technical Field]

The present disclosure relates to a device and a method for allocating resources.

### [Background Art]

A narrowband-internet of things (NB-IoT) standard and an enhanced machine-type communication (eMTC) standard based on a fourth-generation mobile communication may be used also in a fifth-generation mobile communication. As a system of a new radio (NR) standard based on the fifth-generation mobile communication is expanded, a demand for a system in which the NB-IoT standard (or the eMTC standard) based on the fourth-generation mobile communication and the NR standard coexist is increasing.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, a device of a base station may comprise a transceiver, memory comprising instructions, and a processor. The instructions, when executed by the processor, may cause the device to determine overlapping resource elements where a plurality of first resource elements configured for a first radio access technology (RAT) and a plurality of second resource elements configured for a second RAT distinct from the first RAT overlap in a designated slot. The instructions, when executed by the processor, may cause the device to determine at least one resource element for transmitting at least one reference signal related to the first RAT among the overlapping resource elements. The instructions, when executed by the processor, may cause the device to allocate a downlink signal related to the second RAT to remaining resource elements excluding the at least one resource element among the plurality of second resource elements. The instructions, when executed by the processor, may cause the device to transmit the at least one reference signal related to the first RAT through the at least one resource element and transmit the downlink signal related to the second RAT through the remaining resource elements excluding the at least one resource element among the plurality of second resource elements.

According to an embodiment, a method performed by a device of a base station may comprise determining overlapping resource elements where a plurality of first resource elements configured for a first radio access technology (RAT) and a plurality of second resource elements configured for a second RAT distinct from the first RAT overlap in a designated slot. The method may comprise determining at least one resource element for transmitting at least one reference signal related to the first RAT among the overlapping resource elements. The method may comprise allocating a downlink signal related to the second RAT to remaining resource elements excluding the at least one resource element among the plurality of second resource elements. The method may comprise transmitting the at least one reference signal related to the first RAT through the at least one resource element and transmitting the downlink signal related to the second RAT through the remaining resource elements excluding the at least one resource element among the plurality of second resource elements. The first RAT may include a new radio (NR). The second RAT may include narrow-band Internet of things (NB-IoT) or enhanced machine-type communication (eMTC).

### [Description of the Drawings]

FIG. 1A illustrates a wireless communication system.
FIG. 1B illustrates an example for describing a resource division scheme for an uplink transmission and a downlink transmission.
FIG. 2 illustrates an example of a base station.
FIG. 3 illustrates an example of a resource structure in a time domain and a frequency domain.
FIG. 4 illustrates an example of channels in a communication standard.
FIG. 5A illustrates an example of physical resource blocks (PRBs) according to a long term evolution (LTE) standard.
FIG. 5B illustrates an example of physical resource blocks (PRBs) according to a new radio (NR) standard.
FIG. 6 illustrates a resource allocation scheme for avoiding a collision according to coexistence of an NR standard and an NB-IoT standard.
FIG. 7A illustrates a resource allocation scheme for avoiding a collision according to coexistence of an NR standard and an NB-IoT standard.
FIG. 7B illustrates a resource allocation scheme for avoiding a collision according to coexistence of an NR standard and an NB-IoT standard.
FIG. 8A illustrates a resource allocation scheme for avoiding a collision according to coexistence of an NR standard and an eMTC standard.
FIG. 8B illustrates a resource allocation scheme for avoiding a collision according to coexistence of an NR standard and an eMTC standard.
FIG. 9 is a flowchart for an operation of a base station for performing resource allocation for data related to a first radio access technology (RAT) and data related to a second RAT.
FIG. 10 is a flowchart for an operation of a base station for performing resource allocation for data related to a first RAT and data related to a second RAT.
FIG. 11 is a flowchart for an operation of a base station.
FIG. 12 illustrates a functional configuration of an electronic device according to embodiments.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to signals (e.g., signal, information, message, signaling), terms referring to resources (e.g., symbol, slot, subframe, radio frame, subcarrier, resource element (RE), resource block (RB), bandwidth part (BWP), occasion), terms referring to operational states (e.g., step, operation, procedure), terms referring to data (e.g., packet, user stream, information, bit, symbol, codeword), terms referring to channels, terms referring to network entities, terms referring to device components, and the like , used in the following description are exemplified for convenience of explanation. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

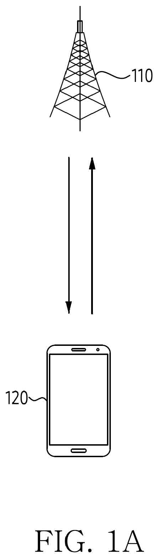

FIG. 1A illustrates a wireless communication system.

Referring to FIG. 1A, FIG. 1A illustrates a base station 110 and a terminal 120 as a portion of nodes that utilize a wireless channel in a wireless communication system. FIG. 1A illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1A, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be MTC UE or a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1A describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

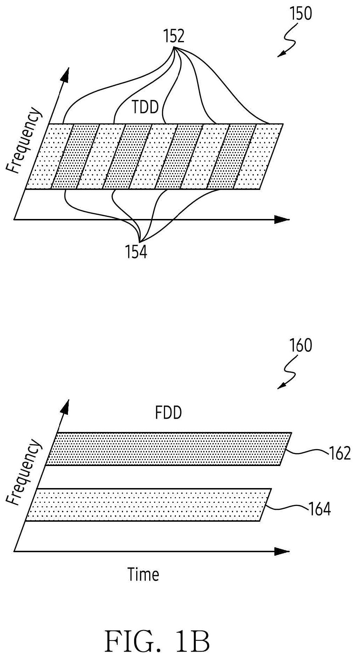

FIG. 1B illustrates an example for explaining a resource division scheme for uplink transmission and downlink transmission. The resource division scheme may include frequency division duplexing (FDD) and time division duplexing (TDD).

Referring to FIG. 1B, examples 150 and 160 of a method of dividing resources used to transmit/receive data in a downlink (DL) transmission from the base station 110 to the terminal 120 and an uplink (UL) transmission from the terminal 120 to the base station 110 are illustrated. The example 150 may indicate an example of a time division duplex (TDD) scheme, which is a method of dividing a resource for DL transmission and a resource for UL transmission over time. The example 160 may indicate an example of a frequency division duplex (FDD) scheme, which is a method of dividing a resource for DL transmission and a resource for UL transmission according to frequency.

Referring to the example 150, the base station 110 may transmit DL signals to the terminal 120 through DL resources 152. The terminal 120 may receive the DL signals transmitted from the base station 110 through the DL resources 152. The terminal 120 may transmit UL signals to the base station 110 through UL resources 154. The base station 110 may receive the UL signals transmitted from the terminal 120 through the UL resources 154. Referring to the example 150, the DL resources 152 and the UL resources 154 may be allocated different time resources. DL transmission transmitted by the base station 110 to the terminal 120 and UL transmission transmitted by the terminal 120 to the base station 110 may be performed in different time domains. The example 150 illustrates an example in which time resources of the same length are allocated to each of DL resources 152 and UL resources 154, but embodiments of the present disclosure are not limited thereto. For example, time resources of different lengths may be allocated to each of DL resources 152 and UL resources 154. In other words, a period for downlink transmission may be set differently from a period for uplink transmission. Alternatively, both DL resources 152 and UL resources 154 may be allocated time resources of different lengths. In other words, the downlink transmission and the uplink transmission may be transmitted aperiodically. Although not illustrated in the example 150, a guard period may be included between the DL resources 152 and the UL resources 154.

Referring to the example 160, the base station 110 may transmit DL signals to the terminal 120 through the DL resources 162. The terminal 120 may receive the DL signals transmitted from the base station 110 through the DL resources 162. The terminal 120 may transmit UL signals to the base station 110 through the UL resources 164. The base station 110 may receive the UL signals transmitted from the terminal 120 through the UL resources 164. Referring to the example 150, the DL resources 152 and the UL resources 154 may be allocated different frequency resources. In other words, DL transmission transmitted by the base station 110 to the terminal 120 and UL transmission transmitted by the terminal 120 to the base station 110 may be performed in different frequency domain. The example 150 illustrates an example in which frequency resources for bands of the same size are allocated to each of DL resources 152 and UL resources 154, but embodiments of the present disclosure are not limited thereto. For example, each resource of the DL resources 152 and the UL resources 154 may be allocated a frequency resources for bands having different sizes.

When comparing the example 150 and the example 160, the DL resources 152 and the UL resources 154 may be allocated a frequency resource having a wider band than the DL resources 162 and UL resources 164. For example, the base station 110 or the terminal 120 of the example 150 may transmit a larger amount of data for the same time compared to the base station 110 or the terminal 120 of the example 160. In contrast, the DL resources 162 and the UL resources 164 may be allocated a frequency resource having a narrower band than the DL resources 152 and the UL resources 154, but may be allocated a time resource having a longer time interval. For example, the base station 110 or the terminal 120 of the example 160 may transmit seamlessly (or continuously) compared to the base station 110 or the terminal 120 of the example 150.

In order to describe a TDD scheme in embodiments of the present disclosure, a resource structure of a TDD scheme defined in a communication standard (e.g., LTE or NR) is exemplarily described. According to an embodiment, the base station 110 and the terminal 120 may use a TDD scheme of LTE. The TDD scheme of LTE defines a time resource for downlink communication and a time resource for uplink communication in one radio frame. The radio frame may include a UL subframe for uplink (UL) transmission and a DL subframe for downlink (DL) transmission. The frame may include a special subframe (SSF) for switching from downlink transmission to uplink transmission. Herein, a combination of a UL subframe, a DL subframe, and a special subframe included in one frame is referred to as a UL/DL configuration. Another UL/DL configuration shows another combination of a UL subframe, a DL subframe, and a special subframe in one frame. The UL/DL configuration may be operated as shown in Table 1 below. In the following Table 1, D indicates a DL subframe, S indicates a special subframe, and U indicates a UL subframe. For example, a UL/DL configuration #2 may include six DL subframes, two UL subframes, and two special subframes, and a UL/DL configuration #5 may include eight DL subframes, one UL subframe, and one special subframe.

**[Table 1]**

| **UL/DL Configura tion** | **Subframe Number** | | | | | | | | | | **The Number of Each Subframe** | | |
|---|---|---|---|---|---|---|---|---|---|---|---|---|---|
| | **0** | **1** | **2** | **3** | **4** | **5** | **6** | **7** | **8** | **9** | **D L** | **U L** | **S** |
| 0 | D | S | U | U | U | D | S | U | U | U | 2 | 6 | 2 |
| 1 | D | S | U | U | D | D | S | U | U | D | 4 | 4 | 2 |
| 2 | D | S | U | D | D | D | S | U | D | D | 6 | 2 | 2 |
| 3 | D | S | U | U | U | D | D | D | D | D | 6 | 3 | 1 |
| 4 | D | S | U | U | D | D | D | D | D | D | 7 | 2 | 1 |
| 5 | D | S | U | D | D | D | D | D | D | D | 8 | 1 | 1 |
| 6 | D | S | U | U | U | D | S | U | U | D | 3 | 5 | 2 |

The special subframe may include a downlink pilot time slot (DwPTS), a guard period (GP), and an uplink pilot time slot (UpPTS). DwPTS is a section for downlink resources in a special subframe and may be used for a physical downlink shared channel (PDSCH) transmission. UpPTS is a section for uplink resources in a special subframe and may be used for a sounding reference signal (SRS) or physical random access channel (PRACH) transmission. The guard period (GP) is a section in which neither downlink transmission nor uplink transmission occurs, and may be a section required for downlink-uplink switching. The guard period (GP) may be a section located between DwPTS and UpPTS in one special subframe (e.g., 1 ms). Here, a combination of DwPTS, guard period, and UpPTS included in one special subframe is referred to as a special subframe configuration (SSF configuration). Different SSF configurations indicate different combinations of the length of DwPTS, the length of the guard period, and the length of UpPTS in one frame. When a wireless communication environment supports LTE-TDD scheme, the SSF configuration may be operated as shown in Table 2 below. For example, SSF configuration #5 may indicate a combination in which DwPTS occupies 3 symbols, guard period occupies 9 symbols, and UpPTS occupies 2 symbols, and SSF configuration #7 may indicate a combination in which DwPTS occupies 10 symbols, guard period occupies 2 symbols, and UpPTS occupies 2 symbols.

**[Table 2]**

| SSF Configuration | Symbol Number | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | Dw | | | GP | | | | | | | | | | Up |
| 1 | Dw | | | | | | | | | GP | | | | Up |
| 2 | Dw | | | | | | | | | | GP | | | Up |
| 3 | Dw | | | | | | | | | | | GP | | Up |
| 4 | Dw | | | | | | | | | | | | GP | Up |
| 5 | Dw | | | GP | | | | | | | | | Up | |
| 6 | Dw | | | | | | | | | GP | | | Up | |
| 7 | Dw | | | | | | | | | | GP | | Up | |
| 8 | Dw | | | | | | | | | | | GP | Up | |
| 9 | Dw | | | | | | GP | | | | | | Up | |

According to an embodiment, the base station 110 and the terminal 120 may use a TDD scheme of NR. The TDD scheme of the NR may be configured to be more flexible than the TDD scheme of LTE. The TDD scheme of the NR defines a DL-UL pattern indicating a relationship between a DL time resource for downlink communication and a UL time resource for uplink communication. The DL-UL pattern may include a configuration periodicity, a DL time interval, and a UL time interval. The configuration periodicity may refer to a time to which one DL-UL pattern is applied. The configuration periodicity may be one of 0.5 ms, 0.625 ms, 1 ms, 1.25 ms, 2.5 ms, 3 ms, 4 ms, 5 ms, and 10 m. The DL time interval may be a time resource in which a downlink communication is continued. The DL time interval may be represented as the number of slots, the number of slots and the number of symbols, or only the number of symbols. The DL time interval may be located at a beginning part within one configuration periodicity. The UL time interval may be a time resource in which an uplink is continued. The UL time interval may be represented as the number of slots, the number of slots and the number of symbols, or only the number of symbols. The UL time interval may be located at an end part within one configuration periodicity. Slots other than a DL slot (slot in which all symbols are DL symbols) and a UL slot (slot in which all symbols are UL symbols) in one configuration periodicity may be flexible slots. A downlink symbol, an uplink symbol, and a flexible symbol may be distinguished from each other even in symbols (e.g., 14 symbols) in the slot. As an example of a resource structure of an NR TDD, when subcarrier spacing (SCS) is 15 kHz, five slots may be defined during a configuration periodicity of 5 ms. Among the five slots, the first two slots may be downlink slots, the last two slots may be uplink slots, and the middle slot may have both an uplink symbol and a downlink symbol. Among the 14 symbols of the remaining slot, the first 5 symbols may be downlink symbols, the last 3 symbols of the 14 symbols may be uplink symbols, and the remaining 6 symbols of the 14 symbols may be flexible symbols.

Since the same carrier frequency is used for uplink transmission and downlink transmission in the TDD scheme, it is necessary to distinguish between the DL time interval and the UL time interval. Therefore, as described above, resource structures for the TDD scheme may include the DL time interval and the UL time interval, and a remaining period between the DL time interval and the UL time interval. For example, a transmitting path may be used in the DL time interval in which the base station 110 transmits a signal, but a receiving path may not be used in the UL time interval in which the base station 110 receives a signal instead of the transmission path.

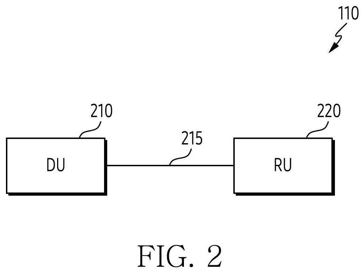

FIG. 2 illustrates an example of a base station. In FIG. 2, a DU and an RU in which functions of a base station are divided and implemented by different entities are described. For communication between the DU and the RU, a fronthaul interface may be used. Unlike a backhaul between a base station and a core network, the fronthaul refers to a connection between entities between a radio access network (RAN) and a base station. FIG. 2 illustrates an example of a fronthaul architecture between one DU 210 and one RU 220, but this is only for convenience of explanation and the present disclosure is not limited thereto. In other words, the embodiments of the present disclosure may also be applied to a fronthaul architecture between one DU and a plurality of RU. For example, the embodiments of the present disclosure may be applied to a fronthaul architecture between one DU and two RU. In addition, the embodiments of the present disclosure may also be applied to a fronthaul architecture between one DU and three RU.

Referring to FIG. 2, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2 describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. As an example, the distributed unit (DU) may include the digital unit (DU) and the radio unit (RU) of FIG. 2. In addition, as an example, between a core (e.g., 5G core (5GC) or next generation core (NGC)) network and a radio access network (RAN), the base station may be implemented in an architecture in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

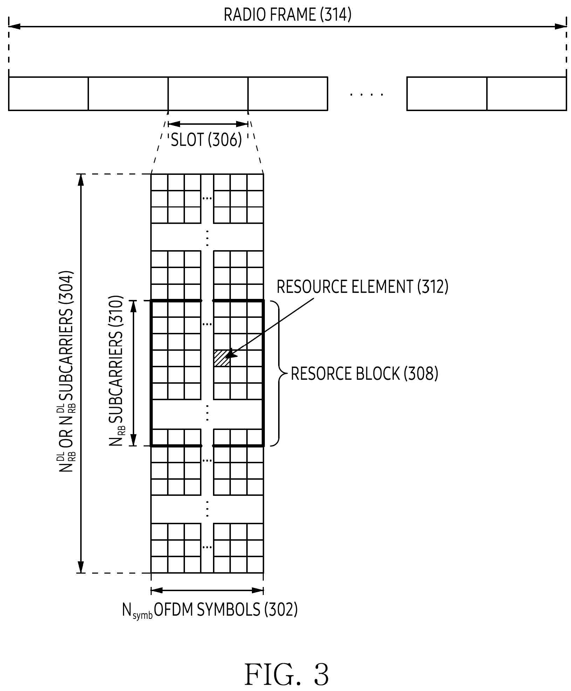

FIG. 3 illustrates an example of a resource structure in a time domain and a frequency domain. FIG. 3 illustrates a basic structure of a time-frequency domain, which is a radio resource domain in which data or a control channel is transmitted in downlink or uplink.

Referring to FIG. 3, a horizontal axis indicates the time domain and a vertical axis indicates the frequency domain. A minimum transmission unit in the time domain is an orthogonal frequency division multiplexing (OFDM) symbol, and Nsymb OFDM symbols 302 are gathered to form one slot 306. A length of a subframe is defined as 1.0 ms, and a length of a radio frame 314 is defined as 10 ms. A minimum transmission unit in the frequency domain is a subcarrier, and a carrier bandwidth configuring a resource grid may be configured with NBW subcarriers 304.

A basic unit of a resource in the time-frequency domain is a resource element (hereinafter referred to as 'RE') 312, and may be indicated as an OFDM symbol index and a subcarrier index. A resource block may include a plurality of resource elements. In an LTE system, a resource block (RB) (or a physical resource block, hereinafter 'PRB') is defined as Nsymb consecutive OFDM symbols in the time domain and NSCRB consecutive subcarriers in the frequency domain. In an NR system, a resource block (RB) 308 may be defined as NSCRB consecutive subcarriers 310 in the frequency domain. One RB 308 includes NSCRB REs 312 on a frequency axis. In general, a minimum unit of transmission of data is RB and the number of subcarriers is NSCRB=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 3 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 4 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 3 and Table 4, N/A may be a bandwidth-subcarrier combination that is not supported in the NR system.

**[Table 3]**

| Channel Bandwidth [MHz] | SCS | 5 | 10 | 20 | 50 | 80 | 100 |
|---|---|---|---|---|---|---|---|
| Transmission Bandwidth Configuration NRBN_{RB} | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

**[Table 4]**

| Channel Bandwidth [MHz] | SCS | 50 | 100 | 200 | 400 |
|---|---|---|---|---|---|
| Transmission Bandwidth Configuration N_{RB} | 60kHz | 66 | 132 | 264 | N/A |
| | 120kHz | 32 | 66 | 132 | 264 |

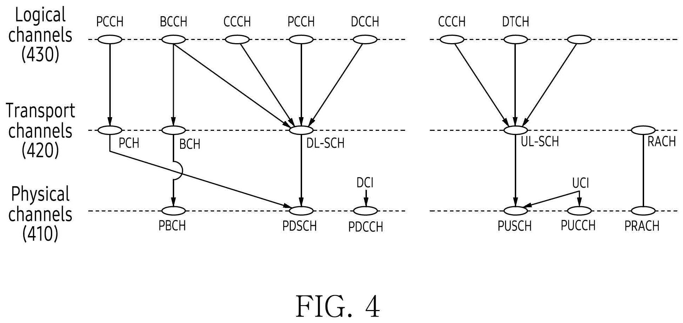

FIG. 4 illustrates an example of channels in a communication standard.

The channels may include a physical channel 410, a transport channel 420, and a logical channel 430 according to layers defined in the communication standard.

Referring to FIG. 4, the physical channel 410 may provide functions (e.g., channel coding, HARQ processing, modulation, multi-antenna processing, and resource mapping) that are necessary to generate physical signals in a physical layer. In the physical layer, the physical signals are modulated in an OFDM scheme and may be transmitted in a wireless environment via a time-frequency resource (e.g., the resource of the resource grid of FIG. 3).

In downlink transmission, the physical channel 410 may include at least one of a physical broadcast channel (PBCH), a physical downlink shared channel (PDSCH), or a physical downlink control channel (PDCCH). The PDCCH may be used to carry downlink control information (DCI). In general, downlink data may refer to symbols transmitted through the PDSCH, and a downlink control signal may include symbols transmitted through the PDCCH. In addition, in a downlink, an SS/PBCH block including a synchronization signal (e.g., a primary synchronization signal (PSS), or a secondary synchronization signal (SSS)) for synchronization and a broadcast signal (e.g., PBCH) may be transmitted in addition to channels illustrated in FIG. 4. In addition, in the downlink, a channel state information-reference signal (CSI-RS) for obtaining measurement or channel information, a demodulation reference signal (DMRS) for channel estimation and demodulation, and a phase tracking reference signal (PTRS) may be transmitted.

In uplink transmission, the physical channel 410 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may refer to symbols transmitted through the PUSCH, and an uplink control signal may refer to symbols corresponding to the UCI. For example, the UCI may include at least one of a scheduling request (SR), a hybrid automatic request (HARQ)-acknowledge (ACK) bit(s), or channel state information (CSI). In addition, in uplink, the DMRS for channel estimation and demodulation, and the PTRS may be transmitted for the channel estimation, in addition to the channels illustrated in FIG. 4.

The transport channel 420 may connect a physical layer and a medium access channel (MAC) layer located at a higher level of the physical layer, and may be classified according to how data is transmitted through a wireless interface. In the downlink, the transport channel 420 may include at least one of a paging channel (PCH) for paging, a broadcast channel (BCH) for broadcasting system information, and a downlink shared channel (DL-SCH) transmission of downlink data. In the uplink, the transport channel 420 may include at least one of a random access channel (RACH) for transmission of a random access preamble or an uplink shared channel (UL-SCH) for transmission of uplink data.

The logical channel 430 is located above the transport channel and is mapped to the transport channel 420. The logical channel 430 may be classified into a control channel for transmitting control area information and a traffic channel for transmitting user area information. The control channel of the logical channel 430 may include at least one of a paging control channel (PCCH), a broadcast control channel (BCCH), a common control channel (CCCH), or a dedicated control channel (DCCH). The traffic channel of the logical channel 430 may include a dedicated traffic channel (DTCH).

In describing embodiments of the present disclosure, a random access signal may include sequences transmitted through a physical random access channel (PRACH). 'data' may include signals other than a reference signal. For example, 'data' obtained by a receiver in uplink communication may include signals transmitted through the PUSCH. However, the PUSCH is an example, and it is certain that the embodiments of the present disclosure may be applied to other channels (e.g., PDSCH, PBCH, PDCCH, and PUCCH) that require channel estimation.

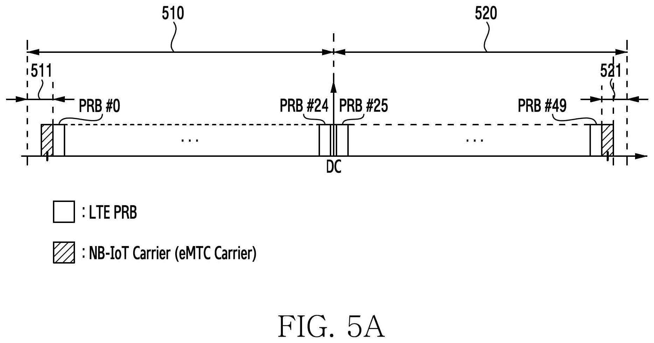

FIG. 5A illustrates an example of physical resource blocks (PRBs) according to a long term evolution (LTE) standard.

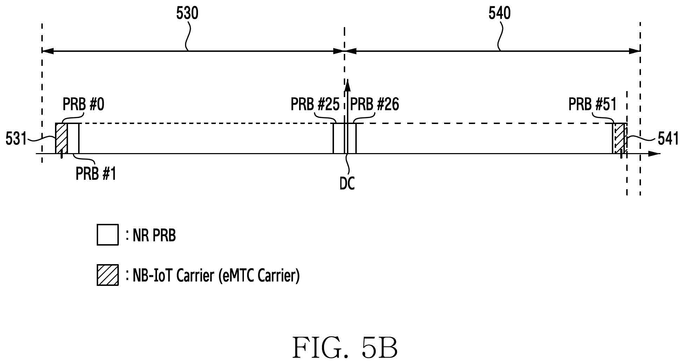

FIG. 5B illustrates an example of physical resource blocks (PRBs) according to a new radio (NR) standard.

Referring to FIG. 5A, according to the long term evolution (LTE) standard, a plurality of PRBs may be configured within a bandwidth of 10 MHz. The illustrated bandwidth of 10 MHz is exemplary, and the bandwidth may be set as one of 1.4 MHz, 3 MHz, 5 MHz, 10 MHz, 15 MHz, and 20 MHz. For example, a PRB may be configured based on a subcarrier spacing (SCS) of 15 kHz.

According to an embodiment, within the bandwidth of 10 MHz, the plurality of PRBs may be configured as 50. As illustrated, within the bandwidth of 10 MHz, a PRB #0 to a PRB #49 may be configured. A low frequency band 510 and a high frequency band 520 may be divided based on a direct current (DC) subcarrier. Within the low frequency band 510, the PRB #0 to the PRB #24 may be disposed. Within the high frequency band 520, the PRB #25 to the PRB #49 may be disposed.

According to an embodiment, a standard based on a narrow band has been proposed together with the LTE standard for machine communication such as internet-of-things (IoT). For example, a narrow-band IoT (NB-IoT) standard and an enhanced machine-type communication (eMTC) standard have been proposed.

As illustrated in FIG. 5A, the LTE standard and the NB-IoT standard (or the eMTC standard) may coexist within the same bandwidth. For example, spectral efficiency (SE) according to the LTE standard may be set to about 90%. Herein, within a remaining frequency region of about 10%, a resource for the NB-IoT standard (or the eMTC standard) may be allocated.

For example, the resource for the NB-IoT standard (or the eMTC standard) may be allocated within a guard band of the LTE standard. The resource for the NB-IoT standard (or the eMTC standard) may be configured based on a bandwidth of 180 kHz. The resource for the NB-IoT standard (or the eMTC standard) may correspond to one PRB of the LTE standard. A device of the NB-IoT standard (or the eMTC standard) may operate in one of a stand-alone operation mode, a guard band operation mode, and an in-band operation mode.

For example, in the stand-alone operation mode, the device of the NB-IoT standard (or the eMTC standard) may operate independently within a designated frequency band. For example, in the guard band operation mode, the device of the NB-IoT standard (or the eMTC standard) may operate using a PRB that is not used within the guard band of the LTE standard. For example, in the in-band operation mode, the device of the NB-IoT standard (or the eMTC standard) may operate using a PRB defined within a frequency band of the LTE standard.

Referring to FIG. 5A, the device of the NB-IoT standard (or the eMTC standard) may operate based on the guard band operation mode. For example, the device of the NB-IoT standard (or the eMTC standard) may operate using a 180 kHz frequency band set within a guard band 511 less than or equal to a frequency band of the PRB #0 of the LTE standard and/or a guard band 521 greater than or equal to a frequency band of the PRB #49 of the LTE standard.

Referring to FIG. 5B, according to the new radio (NR) standard, a plurality of PRBs may be configured within the bandwidth of 10 MHz. The illustrated bandwidth of 10 MHz is exemplary. In a frequency range 1 (FR 1), a bandwidth may be set to a maximum of 100 MHz. For example, the bandwidth may be set to one of 5 MHz, 10 MHz, 15 MHz, 20 MHz, 25 MHz, 30 MHz, 40 MHz, 50 MHz, 60 MHz, 70 MHz, 80 MHz, 90 MHz, and 100 MHz. For example, when a subcarrier spacing (SCS) is 15 kHz, PRBs may be configured within bandwidth of 10 MHz as illustrated in FIG. 5B.

According to an embodiment, a plurality of PRBs may be configured as 52 within the bandwidth of 10 MHz. As illustrated, the PRB #0 to a PRB #51 may be configured within the bandwidth of 10 MHz. Within the bandwidth of 10 MHz, a lower frequency band 530 and a higher frequency band 540 may be divided. The higher frequency band 540 may include a DC subcarrier. Within the lower frequency band 530, the PRB #0 to the PRB #25 may be disposed. Within the higher frequency band 540, the PRB #26 to the PRB #51 may be disposed.

As illustrated in FIG. 5B, the NR standard and the NB-IoT standard (or the eMTC standard) may coexist within the same bandwidth. However, a resource for the NB-IoT standard (or the eMTC standard) may be configured as illustrated in FIG. 5A. The device of the NB-IoT standard (or the eMTC standard) may operate using one of a resource 531 and/or a resource 541.

The resource 531 and/or the resource 541 may overlap with a resource (e.g., the PRB #0 or the PRB #51) of the NR standard. Spectral efficiency (SE) according to the NR standard may be set to 90% or more (e.g., about 93.6%). Accordingly, a resource disposed at a periphery within a frequency band (e.g., the PRB #0 or the PRB #51) of the NR standard may overlap with a guard band NB-IoT resource. For example, the resource 531 may correspond to the PRB #0. However, the resource 541 may not correspond to the PRB #51. In the NR standard, since the DC subcarrier is used, an LTE standard resource element (RE) index may be changed. Accordingly, the resource 531 may correspond to the PRB #0, but the resource 541 may not correspond to the PRB #51.

As illustrated in FIG. 5B, a PRB of the NR standard and a PRB of the NB-IoT standard may overlap in a portion of REs. In this case, an overlap between a tracking reference signal (TRS), which is a wideband signal of the NR standard, and a downlink signal of the NB-IoT standard may occur. For example, since a downlink signal of the eMTC standard may be transmitted in an inband of the NR standard, an overlap between a reference signal (e.g., the tracking reference signal a) configured fixedly within a system bandwidth and the downlink signal of the eMTC standard may occur.

Hereinafter, in the present specification, an operation of a base station 110 for avoiding a collision between a reference signal (e.g., a tracking reference signal) of the NR standard and a downlink signal of the NB-IoT standard (or the eMTC standard) occurring due to coexistence of the NR standard and the NB-IoT standard (or the eMTC standard) will be described. For example, the base station 110 may perform resource allocation for the downlink signal of the NB-IoT standard (or the eMTC standard) such that performance of a terminal of the NR standard is not reduced.

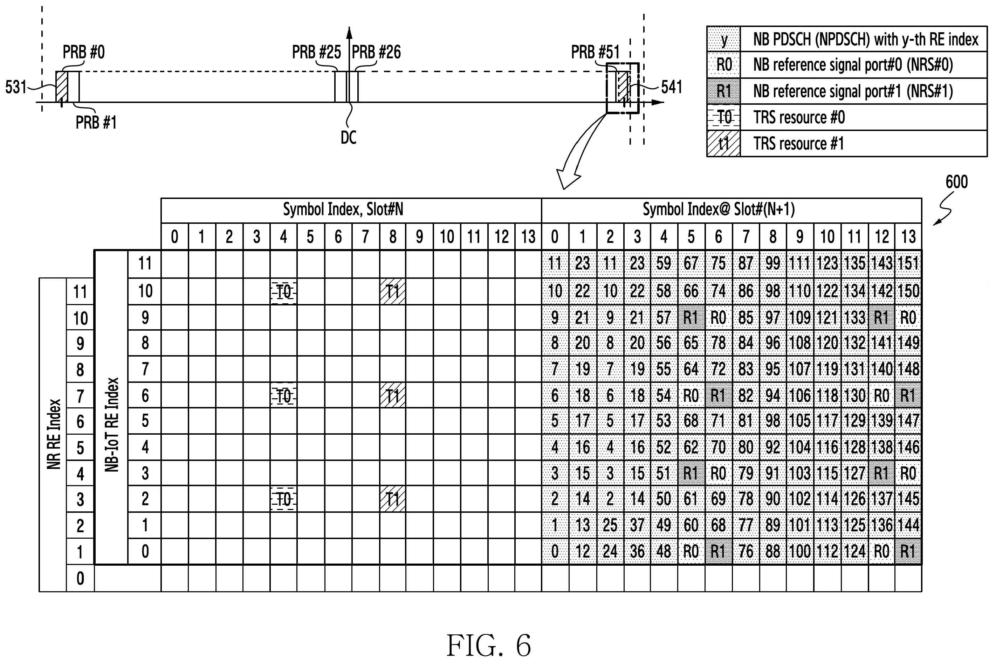

FIG. 6 illustrates a resource allocation scheme for avoiding a collision according to coexistence of an NR standard and an NB-IoT standard.

Referring to FIG. 6, when a downlink signal of the NR standard and a downlink signal of the NB-IoT standard are allocated simultaneously in a frequency band of the same slot, a base station 110 may configure, using a parameter transmitted to a device (or a terminal) of the NB-IoT standard, the device of the NB-IoT standard not to use at least one slot and/or at least one slot. By configuring the device of the NB-IoT standard not to use the at least one slot and/or the at least one slot, allocation of the downlink signal of the NR standard and the downlink signal of the NB-IoT standard to the same resource may be prevented.

An example 600 illustrates a resource plane for a PRB #51 of the NR standard and a resource 541 for the NB-IoT standard. Within the same slot, the downlink signal (e.g., a tracking reference signal) of the NR standard may be allocated in the PRB #51, and the downlink signal of the NB-IoT standard may be allocated in the resource 541. In this case, the base station 110 may not allocate the downlink signal of the NB-IoT standard in a slot in which the downlink signal (e.g., the tracking reference signal of the NR standard (hereinafter, NR TRS)) is allocated. For example, the NR TRS may be allocated in PRB #51 of an N-th slot. The base station 110 may not allocate the downlink signal (or downlink data) of the NB-IoT standard in the resource 541 of the N-th slot. The base station 110 may allocate the downlink signal (or downlink data) of the NB-IoT standard in the resource 541 of an N+1-th slot.

For example, T0 and T1 represent resources through which a tracking reference signal (TRS) according to the NR standard (hereinafter, NR TRS) is transmitted. The NR TRS may be transmitted through a resource (or resource element (RE)) indicated by T0 and/or T1. Downlink data of the NB-IoT standard (e.g., a narrow band physical downlink shared channel (NB PDSCH)) may be transmitted through a resource according to a resource index number y within a resource block (RB). The resource index number y may be configured sequentially within the RB. In FIG. 6, the resource index number y may be indicated from 0 to 151. R0 may represent an NB reference signal (NRS) #0 (or a first NRS) related to an antenna port #0 (or a first antenna port). R1 may represent an NRS #1 (or a second NRS) related to an antenna port #1 (or a second antenna port). The NRS #0 and the NRS #1 may be used for demodulation of the downlink data according to the NB-IoT standard. In FIG. 6, the NRS #0 and the NRS #1 are illustrated as being transmitted simultaneously in one slot, but this is for convenience of description. For example, one of the NRS #0 and the NRS #1 may be transmitted within one slot. For the antenna port #0, the NRS #0 may be transmitted through a resource (or an RE) indicated by R0. For the antenna port #1, the NRS #1 may be transmitted through a resource (or an RE) indicated by R1.

In the resource plane for the PRB #51 of the NR standard and the resource 541 for the NB-IoT standard according to the example 600, an RE index of the NB-IoT standard may not correspond to an RE index of the NR standard. For example, an RE according to an RE index #1 of the NR standard may be set to an RE index #0 of the NB-IoT standard. For example, in the example 600, REs indicated by T0 may be indicated based on an RE index #3, an RE index #7, and an RE index #11 of the NR standard. In the example 600, the REs indicated by T0 may be indicated based on an RE index #2, an RE index #6, and an RE index #10 of the NB-IoT standard.

According to an embodiment, in FR 1, the NR TRS may be transmitted through consecutive slots. Accordingly, a downlink signal (or downlink data) of the NB-IoT standard may not be allocated to the consecutive slots for transmitting the NR TRS. Since the downlink signal (or downlink data) of the NB-IoT standard is not allocated to the consecutive slots, a data rate of the NB-IoT standard may decrease. According to an embodiment, when the downlink signal of the NR standard and the downlink signal of the NB-IoT standard are allocated to the same resource, the base station 110 may not allocate the downlink signal of the NB-IoT standard to a symbol in which the downlink signal of the NR standard (e.g., NR TRS) is transmitted. However, since the downlink signal of the NB-IoT standard is not transmitted in the symbol in which the downlink signal of the NR standard (e.g., NR TRS) is transmitted, a channel coding rate may increase and a data rate may decrease. When the downlink signal of the NR standard and the downlink signal of the NB-IoT standard are allocated to the same resource, a technical feature for minimizing a loss of the data rate of the downlink signal of the NB-IoT standard without changing the terminal of the NB-IoT standard will be described below.

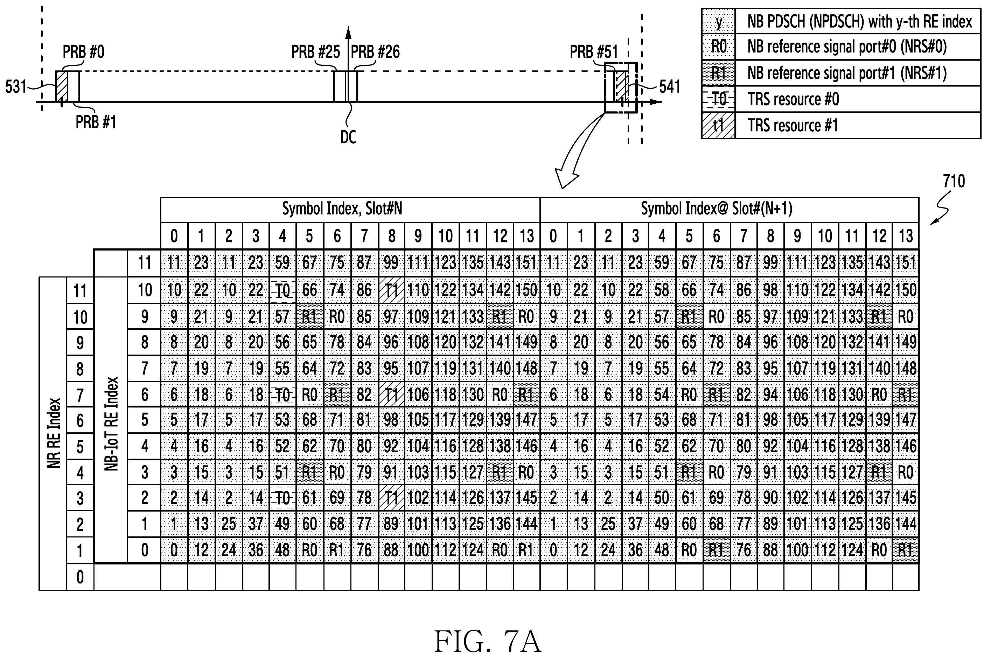

FIG. 7A illustrates a resource allocation scheme for avoiding a collision according to coexistence of an NR standard and an NB-IoT standard.

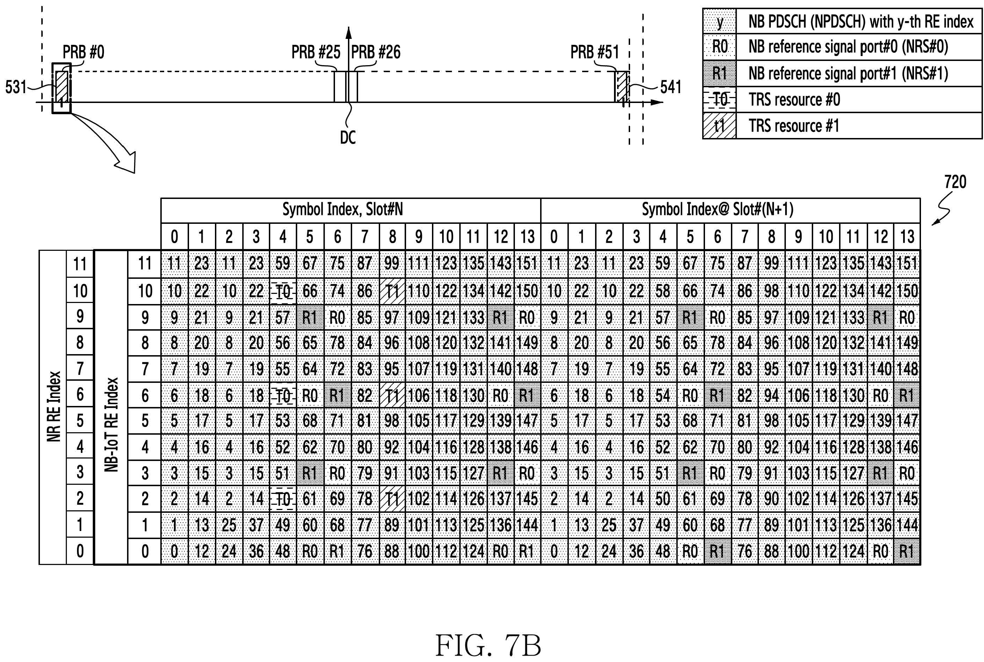

FIG. 7B illustrates a resource allocation scheme for avoiding a collision according to coexistence of an NR standard and an NB-IoT standard.

Referring to FIG. 7A and FIG. 7B, when a downlink signal of the NR standard (e.g., NR TRS) and a downlink signal of the NB-IoT standard are configured to be allocated to the same resource, a base station 110 may change a resource allocation scheme of the NB-IoT standard.

Referring to FIG. 7A, an example 710 illustrates a resource plane for a PRB #51 of the NR standard and a resource 541 for the NB-IoT standard. As described above, in the PRB #51 of the NR standard and the resource 541 for the NB-IoT standard, an RE index of the NR standard and an RE index of the NB-IoT standard may not be set identically. The resource plane is exemplary, and may be configured identically in other PRBs. For example, a resource plane for PRBs (e.g., a PRB #26 to the PRB #51) disposed in the higher frequency band 540 of FIG. 5B and a resource, which corresponds to the PRBs, and is for the NB-IoT standard, may be configured as the example 710.

For example, when an RE for the NR TRS and an RE for downlink data of the NB-IoT standard are set identically in an N-th slot, a collision may occur. The base station 110 may transmit the NR TRS in a symbol index #4 (or a symbol index #8). The base station 110 may transmit the NR TRS through REs according to an RE index #3 of the NR standard, an RE index #7 of the NR standard, and an RE index #11 of the NR standard. The base station 110 may transmit the NR TRS through REs according to an RE index #2 of the NB-IoT standard, an RE index #6 of the NB-IoT standard, and an RE index #10 of the NB-IoT standard.

The base station 110 may allocate a downlink signal of the NB-IoT standard according to a resource allocation scheme different from the resource allocation scheme illustrated in FIG. 6. The base station 110 may allocate the downlink signal of the NB-IoT standard in the N-th slot even when the NR TRS is transmitted in the N-th slot. The base station 110 may not allocate the downlink signal of the NB-IoT standard to an RE (or a resource) in which the NR TRS is transmitted, and may allocate the downlink signal of the NB-IoT standard only to remaining REs.

For example, the base station 110 may sequentially allocate a downlink signal (or downlink data) of the NB-IoT standard according to a symbol index and an RE index. As an example, the base station 100 may sequentially allocate the downlink data of the NB-IoT according to an RE index of the NB-IoT standard within a symbol index #0. The base station 110 may allocate downlink data #0 of the NB-IoT in an RE index #0 of the NB-IoT standard of the symbol index #0. The base station 110 may allocate downlink data #11 of the NB-IoT in an RE index #11 of the NB-IoT standard of the symbol index #0.

An index of downlink data of the NB-IoT may increase in the remaining REs excluding the RE in which the NR TRS is transmitted. The base station 110 may omit allocation of the downlink data of the NB-IoT in an RE in which the NR TRS is allocated, and may allocate the downlink data of the NB-IoT in a next RE. For example, in the symbol index #4, downlink data #49 of the NB-IoT may be transmitted through an RE according to the RE index #1 of the NB-IoT standard. In the symbol index #4, an RE according to the RE index #2 of the NB-IoT standard may be allocated for the NR TRS. In the symbol index #4, the base station 110 may not allocate the downlink data of the NB-IoT standard in the RE according to the RE index #2 of the NB-IoT standard. In the symbol index #4, downlink data #51 of the NB-IoT may be transmitted through an RE according to the RE index #3 of the NB-IoT standard.

Referring to FIG. 7B, an example 720 illustrates a resource plane for a PRB #0 of the NR standard and a resource 531 for the NB-IoT standard. In the PRB #0 of the NR standard and the resource 531 for the NB-IoT standard, an RE index of the NR standard and an RE index of the NB-IoT standard may be set identically. The resource plane is exemplary, and may be configured identically in other PRBs. For example, a resource plane for PRBs (e.g., the PRB #0 to a PRB #25) disposed in the lower frequency band 530 of FIG. 5B and a resource, which corresponds to the PRBs and is for the NB-IoT standard may be configured as the example 720.

For example, when an RE for the NR TRS and an RE for the downlink data of the NB-IoT standard are set identically in the N-th slot, a collision may occur. The base station 110 may transmit the NR TRS in the symbol index #4 (or the symbol index #8). The base station 110 may transmit the NR TRS through REs according to the RE index #2 of the NR standard, the RE index #6 of the NR standard, and the RE index #10 of the NR standard. The base station 110 may transmit the NR TRS through REs according to the RE index #2 of the NB-IoT standard, the RE index #6 of the NB-IoT standard, and the RE index #10 of the NB-IoT standard.

The base station 110 may allocate the downlink signal of the NB-IoT standard according to a resource allocation scheme different from the resource allocation scheme illustrated in FIG. 6. The base station 110 may allocate the downlink signal of the NB-IoT standard in the N-th slot even when the NR TRS is transmitted in the N-th slot. The base station 110 may not allocate the downlink signal of the NB-IoT standard to an RE (or a resource) in which the NR TRS is transmitted, and may allocate the downlink signal of the NB-IoT standard only to remaining REs.

For example, the base station 110 may sequentially allocate the downlink signal (or the downlink data) of the NB-IoT standard according to a symbol index and an RE index. As an example, the base station 100 may sequentially allocate the downlink data of the NB-IoT according to the RE index of the NB-IoT standard within the symbol index #0. The base station 110 may allocate the downlink data #0 of the NB-IoT to an RE according to the RE index #0 of the NB-IoT standard within the symbol index #0. The base station 110 may allocate the downlink data #11 of the NB-IoT to an RE according to the RE index #11 of the NB-IoT standard within the symbol index #0.

An index of the downlink data of the NB-IoT may increase in remaining REs excluding the RE in which the NR TRS is transmitted. The base station 110 may omit allocation of the downlink data of the NB-IoT in an RE in which the NR TRS is allocated, and may allocate the downlink data of the NB-IoT in a next RE. For example, in the symbol index #4, the downlink data #49 of the NB-IoT may be transmitted through the RE according to the RE index #1 of the NB-IoT standard (or the NR standard). In the symbol index #4, the RE according to the RE index #2 of the NB-IoT standard (or the NR standard) may be allocated for the NR TRS. In the symbol index #4, the base station 110 may not allocate the downlink data of the NB-IoT standard in the RE according to the RE index #2 of the NB-IoT standard (or the NR standard). In the symbol index #4, the downlink data #51 of the NB-IoT may be transmitted through the RE according to the RE index #3 of the NB-IoT standard.

Referring to FIG. 7A and FIG. 7B, when the downlink signal of the NR standard (e.g., NR TRS) and the downlink signal of the NB-IoT standard are configured to be allocated to the same resource (or RE), the base station 110 may first allocate the downlink signal of the NR standard (e.g., NR TRS), and may allocate the downlink signal of the NB-IoT standard to remaining resources. According to the above-described embodiment, since the downlink signal of the NR standard (e.g., NR TRS) and the downlink signal of the NB-IoT standard may be allocated together within a PRB, a decrease in a data rate of the NB-IoT standard may be minimized.

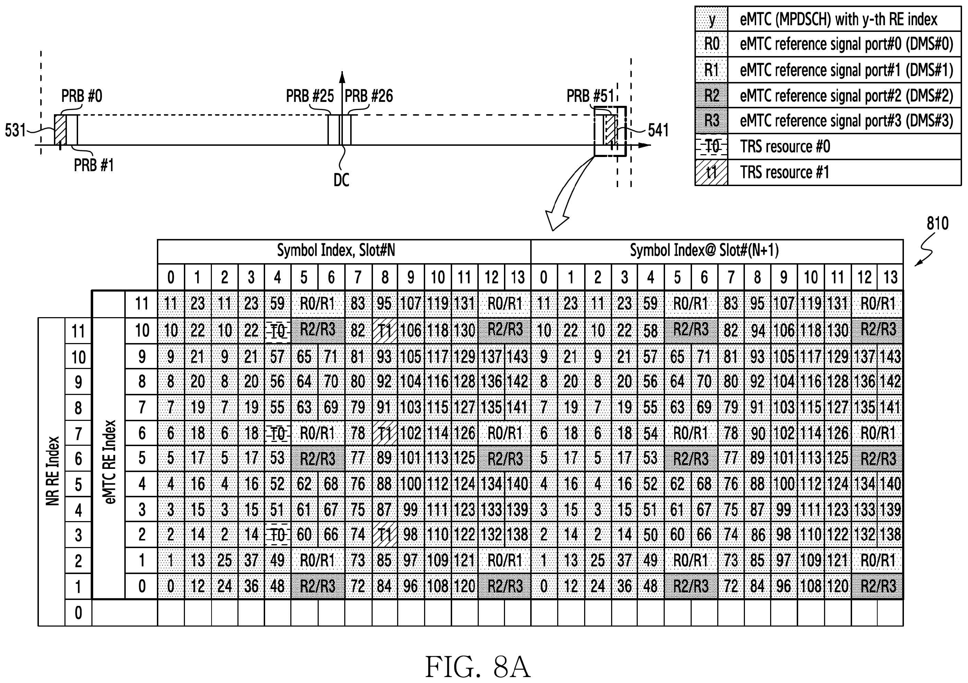

FIG. 8A illustrates a resource allocation scheme for avoiding a collision according to coexistence of an NR standard and an eMTC standard.

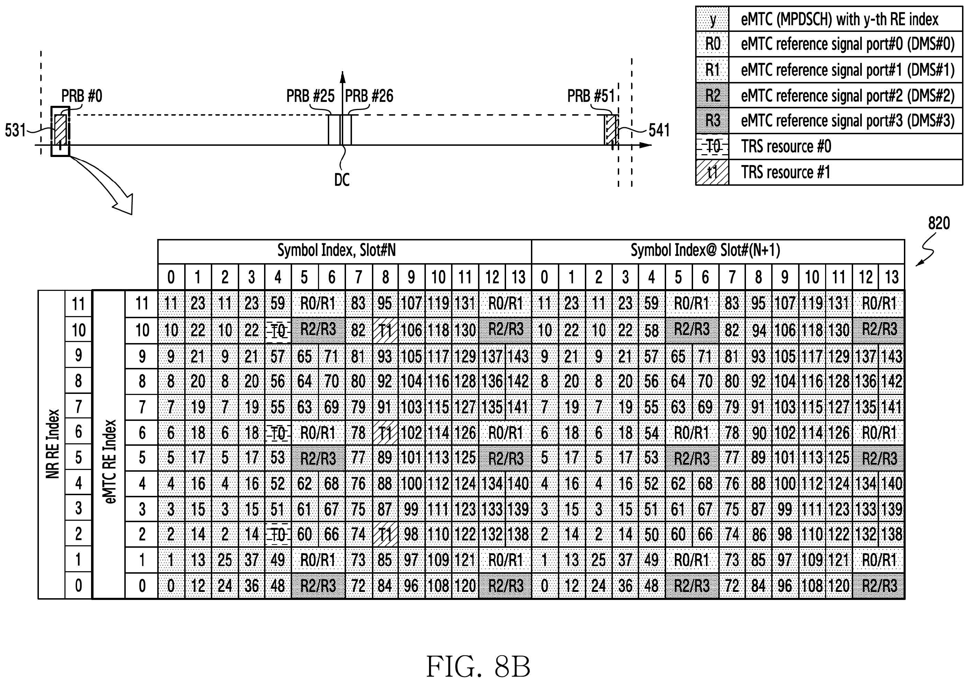

FIG. 8B illustrates a resource allocation scheme for avoiding a collision according to coexistence of an NR standard and an eMTC standard.

Referring to FIG. 8A and FIG. 8B, when a downlink signal of the NR standard (e.g., NR TRS) and a downlink signal of the eMTC standard are configured to be allocated to the same resource, a base station 110 may change a resource allocation scheme of the eMTC standard.

Referring to FIG. 8A, an example 810 represents a resource plane for a PRB #51 of the NR standard and a resource 541 for the eMTC standard. As described above, in the PRB #51 of the NR standard and the resource 541 for the eMTC standard, an RE index of the NR standard and an RE index of the eMTC standard may not be set identically. The resource plane is exemplary, and may be configured identically in other PRBs. For example, a resource plane for PRBs (e.g., a PRB #26 to a PRB #51) disposed in a higher frequency band 540 and a resource, which corresponds to the PRBs and is for the eMTC standard may be configured as the example 810.

For example, T0 and T1 represent resources through which a tracking reference signal (TRS) according to the NR standard (hereinafter, NR TRS) is transmitted. The NR TRS may be transmitted through a resource (or resource element (RE)) indicated by T0 and/or T1. Downlink data of the eMTC standard (e.g., a machine-type communication physical downlink shared channel (MPDSCH)) may be transmitted through a resource according to a resource index number y within a resource block (RB). The resource index number y may be configured sequentially within the RB. R0 may represent an eMTC reference signal #0 (or a demodulation reference signal (DMRS) #0) related to an antenna port #0 (or a first antenna port). R1 may represent an eMTC reference signal #1 (or a DMRS #1) related to an antenna port #1 (or a second antenna port). R2 may represent an eMTC reference signal #2 (or a DMRS #2) related to an antenna port #2 (or a third antenna port). R3 may represent an eMTC reference signal #3 (or a DMRS #3) related to an antenna port #3 (or a fourth antenna port).

For example, when an RE for the NR TRS and an RE for the downlink data of the eMTC standard are set identically in an N-th slot, a collision may occur. The base station 110 may transmit the NR TRS in a symbol index #4 (or a symbol index #8). The base station 110 may transmit the NR TRS through REs according to an RE index #3 of the NR standard, an RE index #7 of the NR standard, and an RE index #11 of the NR standard. The base station 110 may transmit the NR TRS through REs according to an RE index #2 of the eMTC standard, an RE index #6 of the eMTC standard, and an RE index #10 of the eMTC standard.

The base station 110 may allocate the downlink signal of the eMTC standard according to a resource allocation scheme different from the resource allocation scheme illustrated in FIG. 6. The base station 110 may allocate the downlink signal of the eMTC standard in the N-th slot even when the NR TRS is transmitted in the N-th slot. The base station 110 may not allocate the downlink signal of the eMTC standard to an RE (or a resource) in which the NR TRS is transmitted, and may allocate the downlink signal of the eMTC standard only to remaining REs.

For example, the base station 110 may sequentially allocate the downlink signal (or downlink data) of the eMTC standard according to a symbol index and an RE index. As an example, the base station 100 may sequentially allocate the downlink data of the eMTC according to the RE index of the eMTC standard within the symbol index #0. The base station 110 may allocate downlink data #0 of the eMTC in an RE index #0 of the eMTC standard of the symbol index #0. The base station 110 may allocate downlink data #11 of the eMTC in an RE index #11 of the eMTC standard of the symbol index #0.

An index of the downlink data of the eMTC may increase in the remaining REs excluding the RE in which the NR TRS is transmitted. The base station 110 may omit allocation of the downlink data of the eMTC in an RE in which the NR TRS is allocated, and may allocate the downlink data of the eMTC in a next RE. For example, in the symbol index #4, downlink data #49 of the eMTC may be transmitted through an RE according to the RE index #1 of the eMTC standard. In the symbol index #4, an RE according to the RE index #2 of the eMTC standard may be allocated for the NR TRS. In the symbol index #4, the base station 110 may not allocate the downlink data of the eMTC standard in the RE according to the RE index #2 of the eMTC standard. In the symbol index #4, downlink data #51 of the eMTC may be transmitted through an RE according to an RE index #3 of the eMTC standard.

Referring to FIG. 8B, an example 820 illustrates a resource plane for a PRB #0 of the NR standard and a resource 531 for the eMTC standard. In the PRB #0 of the NR standard and the resource 531 for the eMTC standard, an RE index of the NR standard and an RE index of the eMTC standard may be set identically. The resource plane is exemplary, and may be configured identically in other PRBs. For example, a resource plane for PRBs (e.g., the PRB #0 to a PRB #25) disposed in a lower frequency band 530 and a resource, which corresponds to the PRBs and is for the eMTC standard may be configured as the example 820.

For example, when an RE for the NR TRS and an RE for the downlink data of the eMTC standard are set identically in the N-th slot, a collision may occur. The base station 110 may transmit the NR TRS in the symbol index #4 (or the symbol index #8). The base station 110 may transmit the NR TRS through REs according to an RE index #2 of the NR standard, am RE index #6 of the NR standard, and an RE index #10 of the NR standard. The base station 110 may transmit the NR TRS through REs according to the RE index #2 of the eMTC standard, the RE index #6 of the eMTC standard, and the RE index #10 of the eMTC standard.

The base station 110 may allocate the downlink signal of the eMTC standard according to a resource allocation scheme different from the resource allocation scheme illustrated in FIG. 6. The base station 110 may allocate the downlink signal of the eMTC standard in the N-th slot even when the NR TRS is transmitted in the N-th slot. The base station 110 may not allocate the downlink signal of the eMTC standard to an RE (or a resource) in which the NR TRS is transmitted, and may allocate the downlink signal of the eMTC standard only to remaining REs.

For example, the base station 110 may sequentially allocate the downlink signal (or the downlink data) of the eMTC standard according to a symbol index and an RE index. As an example, the base station 100 may sequentially allocate the downlink data of the eMTC according to the RE index of the eMTC standard within the symbol index #0. The base station 110 may allocate the downlink data #0 of the eMTC to an RE according to the RE index #0 of the eMTC standard within the symbol index #0. The base station 110 may allocate the downlink data #11 of the eMTC to an RE according to the RE index #11 of the eMTC standard within the symbol index #0.

An index of the downlink data of the eMTC may increase in the remaining REs excluding the RE in which the NR TRS is transmitted. The base station 110 may omit allocation of the downlink data of the eMTC in the RE in which the NR TRS is allocated, and may allocate the downlink data of the eMTC in a next RE. For example, in the symbol index #4, the downlink data #49 of the eMTC may be transmitted through the RE according to the RE index #1 of the eMTC standard (or the NR standard). In the symbol index #4, an RE according to the RE index #2 of the eMTC standard (or the NR standard) may be allocated for the NR TRS. In the symbol index #4, the base station 110 may not allocate the downlink data of the eMTC standard in the RE according to the RE index #2 of the eMTC standard (or the NR standard). In the symbol index #4, the downlink data #51 of the eMTC may be transmitted through the RE according to the RE index #3 of the eMTC standard.

Referring to FIG. 8A and FIG. 8B, when the downlink signal of the NR standard (e.g., NR TRS) and the downlink signal of the eMTC standard are configured to be allocated to the same resource (or RE), the base station 110 may first allocate the downlink signal of the NR standard (e.g., NR TRS), and may allocate the downlink signal of the eMTC standard to remaining resources. According to the above-described embodiment, since the downlink signal of the NR standard (e.g., NR TRS) and the downlink signal of the eMTC standard may be allocated together within a PRB, a decrease in a data rate of the eMTC standard may be minimized.

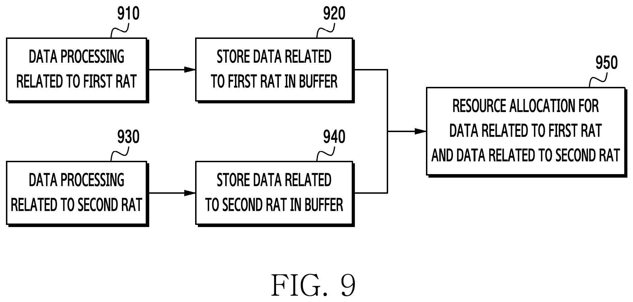

FIG. 9 is a flowchart for an operation of a base station for performing resource allocation for data related to a first radio access technology (RAT) and data related to a second RAT.

Referring to FIG. 9, in operation 910, a base station 110 may perform data processing related to the first radio access technology (RAT) (e.g., NR). For example, the base station 110 may perform processing on data to be transmitted to a terminal configured based on the first RAT.

In operation 920, the base station 110 may store data related to the first RAT in a buffer (or memory) based on the processing. The base station 110 may store the data related to the first RAT in the buffer before allocating a resource for the data related to the first RAT. For example, the data related to the first RAT may include data for configuring a reference signal related to the first RAT.

In operation 930, the base station 110 may perform data processing related to the second RAT (e.g., NB-IoT or eMTC). For example, the base station 110 may perform processing on data to be transmitted to a terminal configured based on the second RAT.

In operation 940, the base station 110 may store data related to the second RAT in the buffer based on the processing. The base station 110 may store the data related to the second RAT in the buffer before allocating a resource for the data related to the second RAT. For example, the data related to the second RAT may include data for configuring a reference signal related to the second RAT and data related to information to be transmitted to the terminal configured based on the second RAT.

In operation 950, the base station 110 may perform resource allocation for the data related to the first RAT and the data related to the second RAT. For example, the base station 110 may identify (or obtain) the data related to the first RAT and the data related to the second RAT stored in the buffer. The base station 110 may perform resource allocation such that the data related to the first RAT and the data related to the second RAT are transmitted within one slot.

For example, the base station 110 may allocate the data related to the first RAT to a resource prior to the data related to the second RAT. Among a plurality of REs set as a resource for the second RAT, the base station 110 may allocate the data related to the first RAT to at least one RE. The base station 110 may allocate the data related to the second RAT to remaining REs excluding the at least one RE among the plurality of REs. The base station 110 may transmit the data related to the first RAT using the at least one RE, and may transmit the data related to the second RAT using the remaining REs.

The terminal configured based on the second RAT may identify (or recognize) at least one RE in which the data related to the first RAT (e.g., NR TRS) is transmitted as the data related to the second RAT. The terminal may demodulate and decode the data related to the first RAT. The data related to the first RAT may act as interference during decoding.

For example, a data coding rate of the data related to the second RAT may be low. Accordingly, even when the data related to the first RAT acts as the interference, the terminal may decode the data related to the second RAT based on an error recovery process of a channel decoder of the terminal. For example, the data related to the second RAT may be repeatedly transmitted through a plurality of slots. Accordingly, even when the data related to the first RAT acts as the interference, the terminal configured based on the second RAT may decode the data related to the second RAT.

For example, even when the data related to the first RAT and the data related to the second RAT are transmitted within one slot (or one PRB), the terminal configured based on the second RAT may decode the data related to the second RAT.

According to the above-described embodiment, degradation of the data rate of data related to the second RAT may be minimized without degradation of performance of the terminal configured based on the second RAT. According to the above-described embodiment, the terminal configured based on the second RAT may not need to know an RE to which data related to the first RAT (e.g., NR RS or NR TRS) is allocated. Accordingly, operations according to the above-described embodiment may be performed without changing a message of an upper layer such as a radio reconfigured connection (RRC) message or downlink control indication (DCI) or downlink allocation information.

According to an embodiment, when the reference signal related to the first RAT and the reference signal related to the second RAT are configured to be allocated to the same resource (or RE), the base station 110 may perform resource allocation such that the reference signal related to the first RAT is transmitted. The terminal configured based on the first RAT may perform data processing without loss.

According to an embodiment, the base station 110 may identify whether the data related to the first RAT (or the reference signal) and the data related to the second RAT collide in which slot. The base station 110 may perform resource allocation using configuration information for avoiding a collision and information indicating in which RB the collision occurs.

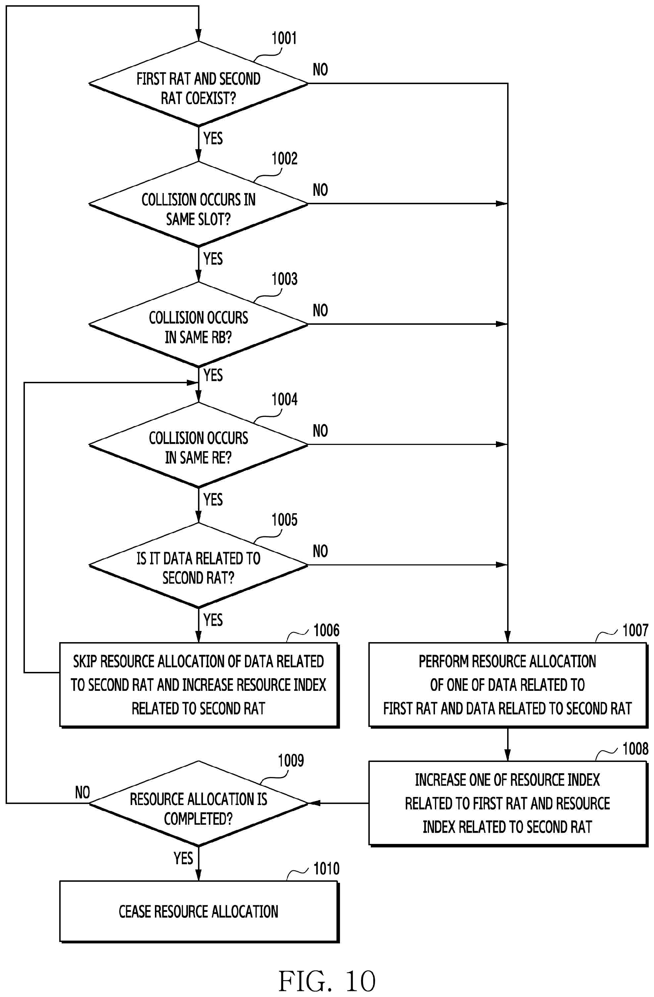

A specific operation for the base station 110 to perform resource allocation for the data related to the first RAT and the data related to the second RAT according to the operation 950 will be described in FIG. 10.

FIG. 10 is a flowchart for an operation of a base station for performing resource allocation for data related to a first RAT and data related to a second RAT.

Referring to FIG. 10, in operation 1001, a base station 110 may check (or identify) whether a first RAT and a second RAT coexist. For example, the base station 110 may check (or identify) whether the first RAT and the second RAT coexist by checking whether data needs to be transmitted to both a terminal configured based on the first RAT and a terminal configured based on the second RAT.

In operation 1002, when the first RAT and the second RAT coexist, the base station 110 may check (or identify) whether a collision occurs in the same slot. The base station 110 may check (or identify) whether the collision occurs in the same slot by checking whether a slot for transmitting the data related to the first RAT and a slot for transmitting the data related to the second RAT are identical.

In operation 1003, when the collision occurs in the same slot, the base station 110 may check (or identify) whether the collision occurs in the same RB. The base station 110 may check (or identify) whether the collision occurs in the same RB by checking whether an RB for transmitting the data related to the first RAT and an RB for transmitting the data related to the second RAT are identical.

In operation 1004, when the collision occurs in the same RB, the base station 110 may check (or identify) whether the collision occurs in the same RE. The base station 110 may check (or identify) whether the collision occurs in the same RE by checking whether an RE for transmitting the data related to the first RAT and an RE for transmitting the data related to the second RAT are identical.

In operation 1005, when the collision occurs in the same RE, the base station 110 may check (or identify) whether data allocated to the RE is the data related to the second RAT.

In operation 1006, when the data allocated to the RE is the data related to the second RAT, the base station 110 may skip resource allocation of the data related to the second RAT and may increase a resource index related to the second RAT. The base station 110 may skip resource allocation of the data related to the second RAT based on identifying that an RE for the data related to the first RAT and an RE for the data related to the second RAT are identical. The base station 110 may increase the resource index related to the second RAT without allocating the data related to the second RAT to a corresponding RE.

According to an embodiment, the base station 110 may perform the operation 1005 again after performing the operation 1006.

In operation 1007, when the first RAT and the second RAT do not coexist, the base station 110 may perform resource allocation of one of the data related to the first RAT and the data related to the second RAT. When the collision does not occur in the same slot, the base station 110 may perform resource allocation of one of the data related to the first RAT and the data related to the second RAT. When the collision does not occur in the same RB, the base station 110 may perform resource allocation of one of the data related to the first RAT and the data related to the second RAT. When the collision does not occur in the same RE, the base station 110 may perform resource allocation of one of the data related to the first RAT and the data related to the second RAT.

In operation 1008, the base station 110 may increase one of a resource index related to the first RAT and the resource index related to the second RAT. For example, when the base station 110 performs resource allocation of the data related to the first RAT, the base station 110 may increase the resource index related to the first RAT. For example, when the base station 110 performs resource allocation of the data related to the second RAT, the base station 110 may increase the resource index related to the second RAT.

In operation 1009, the base station 110 may check (or identify) whether resource allocation is completed. The base station 110 may check whether resource allocation is completed within a slot.

According to an embodiment, when resource allocation is not completed, the base station 110 may perform the operation 1001 again.

In operation 1010, when resource allocation is completed, the base station 110 may cease resource allocation. The base station 110 may cease resource allocation and may transmit a signal using a resource to which data is allocated.

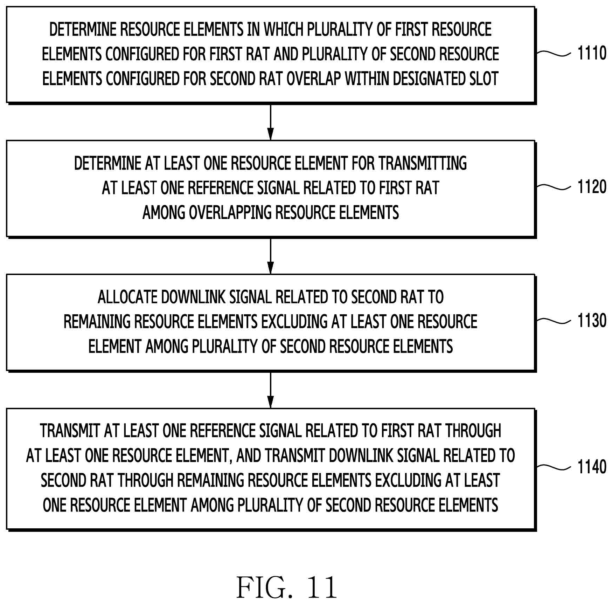

FIG. 11 is a flowchart for an operation of a base station.

Referring to FIG. 11, in operation 1110, a base station 110 may determine resource elements in which a plurality of first resource elements (REs) configured for a first RAT and a plurality of second resource elements configured for a second RAT overlap within a designated slot. For example, the base station 110 may identify the plurality of first resource elements (REs) configured for the first RAT and the plurality of second resource elements configured for the second RAT in the same RB included in the same slot. The base station 110 may identify that the plurality of first resource elements and the plurality of second resource elements overlap. The base station 110 may determine overlapping resource elements in which the plurality of first resource elements and the plurality of second resource elements overlap. For example, the first RAT may include NR. The second RAT may include NB-IoT or eMTC. For example, the plurality of first resource elements may be configured based on a bandwidth (or a BWP) of 100 MHz or less. For example, the plurality of second resource elements may be configured based on a bandwidth of 180 kHz.

According to an embodiment, the plurality of second resource elements may correspond to at least a portion or all of the plurality of first resource elements. As an example, the plurality of second resource elements may be disposed at a periphery of a frequency band related to the plurality of first resource elements. When the plurality of second resource elements correspond to the plurality of first resource elements, the overlapping resource elements may correspond to each of the plurality of first resource elements and the plurality of second resource elements.

According to an embodiment, the plurality of second resource elements may not correspond to the plurality of first resource elements. When the plurality of second resource elements do not correspond to the plurality of first resource elements, the overlapping resource elements may correspond to at least a portion of the plurality of first resource elements. When the plurality of second resource elements do not correspond to the plurality of first resource elements, the overlapping resource elements may correspond to at least a portion of the plurality of second resource elements.

In operation 1120, the base station 110 may determine at least one resource element for transmitting at least one reference signal related to the first RAT among the overlapping resource elements. A downlink signal related to the first RAT and a downlink signal related to the second RAT may be configured to be transmitted within one slot. The base station 110 may identify that at least one reference signal related to the first RAT will be transmitted. The base station 110 may first determine at least one resource element for transmitting the at least one reference signal related to the first RAT.

For example, the at least one reference signal may include a channel state information reference signal (CSI-RS) related to mobility of a terminal. The channel state information reference signal related to the mobility of the terminal may be referred to as a tracking reference signal (TRS). For example, the at least one reference signal may be allocated based on a designated frequency interval in a system bandwidth. The at least one reference signal may be configured to be transmitted based on the designated frequency interval in the system bandwidth. The at least one reference signal may be configured to be transmitted through an RE indicated according to a designated index.

In operation 1130, the base station 110 may allocate the downlink signal related to the second RAT to remaining resource elements excluding the at least one resource element among the plurality of second resource elements. For example, the base station 110 may identify the at least one resource element for transmitting the at least one reference signal related to the first RAT among the plurality of second resource elements. The base station 110 may identify remaining resource elements excluding the identified at least one resource element among the plurality of second resource elements. The base station 110 may allocate the downlink signal related to the second RAT to the remaining resource elements.

For example, the downlink signal related to the second RAT may include downlink data and at least one reference signal related to the second RAT. As an example, when the second RAT is NB-IoT, the at least one reference signal may include an NB reference signal (NRS). As an example, when the second RAT is eMTC, the at least one reference signal may include an eMTC reference signal (or DMRS).

For example, the base station 110 may identify first index information for indicating the at least one resource element allocated for the at least one reference signal related to the first RAT among the plurality of first resource elements. The base station 110 may identify second index information for indicating the at least one resource element among the plurality of second resource elements. As an example, when the plurality of second resource elements correspond to the plurality of first resource elements, the second index information may correspond to the first index information. As an example, when the plurality of second resource elements do not correspond to the plurality of first resource elements, the second index information may be distinct from the first index information. When the plurality of second resource elements are distinct from the plurality of first resource elements, the second index information may be distinct from the first index information.

In operation 1140, the base station 110 may transmit the at least one reference signal related to the first RAT through the at least one resource element, and may transmit the downlink signal related to the second RAT through the remaining resource elements excluding the at least one resource element among the plurality of second resource elements.

For example, the base station 110 may transmit the at least one reference signal related to the first RAT through the at least one resource element within one PRB. The base station 110 may transmit the downlink signal related to the second RAT through the remaining resource elements excluding the at least one resource element among the plurality of second resource elements configured for the second RAT.

For example, the terminal configured based on the second RAT may receive the at least one reference signal related to the first RAT and the downlink signal related to the second RAT. The terminal configured based on the second RAT may identify the at least one reference signal related to the first RAT as interference. Even when the at least one reference signal related to the first RAT is identified as the interference, since the downlink signal related to the second RAT is transmitted to the terminal based on repeated transmission, the terminal may decode the downlink signal related to the second RAT.

According to an embodiment, the base station 110 may identify that the overlapping resource elements in which the plurality of first resource elements and the plurality of second resource elements overlap do not exist. The base station 110 may transmit the downlink signal related to the second RAT through the plurality of second resource elements based on identifying that the overlapping resource elements do not exist.

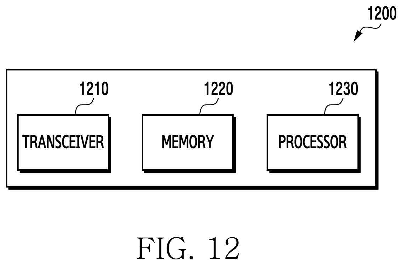

FIG. 12 illustrates a functional configuration of an electronic device according to embodiments. Hereinafter, terms such as "...unit" and "...equipment" used herein refer to a unit for processing at least one function or operation, and may be implemented as hardware, software, or a combination of hardware and software. An electronic device 1200 of FIG. 12 may be an example of the base station 110 described above. The electronic device 1200 of FIG. 12 may be included in the base station 110 described above.

Referring to FIG. 12, the electronic device 1200 includes a transceiver 1210, memory 1220, and a processor 1230.

The transceiver 1210 may perform functions for transmitting and receiving signals in a wired communication environment. The transceiver 1210 may include a wired interface for controlling a direct connection between devices through a transmission medium (e.g., a copper wire, an optical fiber). The transceiver 1210 may support an N2 interface. For example, the transceiver 1210 may transmit an electrical signal to a node (e.g., gNB, gNB-CU, gNB-CU-CP) of a base station through a copper wire, or may perform conversion between an electrical signal and an optical signal. The electronic device 1200 may be connected to one or more base stations through the transceiver 1210. For example, the transceiver 1210 may transmit a paging message to a corresponding base station.

The transceiver 1210 may also perform functions for transmitting and receiving signals in a wireless communication environment. The transceiver 1210 may support an N1 interface. The electronic device 1200 may support NAS signaling through the transceiver 1210. The electronic device 1200 may transmit an NAS message to a UE through the transceiver 1210. For example, the transceiver 1210 may receive a registration request message from the UE. The transceiver 1210 may transmit a registration accept message to the UE.

The transceiver 1210 transmits and receives signals as described above. Accordingly, all or a portion of the transceiver 1210 may be referred to as a "communication unit," a "transmission unit," a "reception unit," or a "transceiver unit". Further, in the following description, transmission and reception performed through a wireless channel are used to include a meaning that the processing as described above is performed by the transceiver 1210. Although only the transceiver 1210 is illustrated in FIG. 12, according to another implementation example, the electronic device 1200 may include two or more transceivers.

Although not illustrated in FIG. 12, the transceiver 1210 may further include a transceiver for connecting with another entity of a core network. The transceiver provides an interface for performing communication with other nodes in a network. That is, a backhaul transceiver converts a bit stream transmitted from a base station to another node, for example, another access node, another base station, an upper node, a core network, and the like, into a physical signal, and converts the physical signal received from the another node into a bit stream.

The memory 1220 stores data such as a basic program, an application program, and configuration information for an operation of the electronic device. The memory 1220 may be referred to as a storage unit. The memory 1220 may be configured as a volatile memory, a non-volatile memory, or a combination of the volatile memory and the non-volatile memory. The memory 1220 provides the stored data according to a request of the processor 1230.

The processor 1230 controls overall operations of the electronic device. The processor 1230 may be referred to as a control unit. For example, the processor 1230 transmits and receives signals through the transceiver 1210 (or through a backhaul communication unit). Further, the processor 1230 records data in the memory 1220 and reads the data from the memory 1220. The processor 1230 may perform functions of a protocol stack required in a communication standard. Although only the processor 1230 is illustrated in FIG. 12, according to another implementation example, the electronic device 1200 may include two or more processors.

The configuration of the electronic device illustrated in FIG. 12 is only an example, and an example of the electronic device for performing embodiments of the present disclosure is not limited to the configuration illustrated in FIG. 12. In some embodiments, a partial configuration may be added, removed, or changed.

According to an embodiment, a device of a base station (e.g., the base station 110) may comprise a transceiver, at least one processor comprising processing circuitry, and memory comprising one or more storage media storing instructions. The instructions, when executed by the at least one processor individually or collectively, may cause the device to determine overlapping resource elements where a plurality of first resource elements configured for a first radio access technology (RAT) and a plurality of second resource elements configured for a second RAT distinct from the first RAT overlap in a designated slot. The instructions, when executed by the at least one processor individually or collectively, may cause the device to determine at least one resource element for transmitting at least one reference signal related to the first RAT among the overlapping resource elements. The instructions, when executed by the at least one processor individually or collectively, may cause the device to allocate a downlink signal related to the second RAT to remaining resource elements excluding the at least one resource element among the plurality of second resource elements. The instructions, when executed by the at least one processor individually or collectively, may cause the device to transmit the at least one reference signal related to the first RAT through the at least one resource element and transmit the downlink signal related to the second RAT through the remaining resource elements excluding the at least one resource element among the plurality of second resource elements. The first RAT may include a new radio (NR). The second RAT may include narrow-band Internet of things (NB-IoT) or enhanced machine-type communication (eMTC).

For example, the at least one reference signal may comprise a channel state information reference signal (CSI-RS) related to mobility of a terminal.

For example, the at least one reference signal may be allocated based on a designated frequency interval in a system bandwidth.

For example, the instructions, when executed by the at least one processor individually or collectively, may cause the device to identify that the overlapping resource elements where the plurality of first resource elements and the plurality of second resource elements overlap do not exist. The instructions, when executed by the at least one processor individually or collectively, may cause the device to, based on identifying that the overlapping resource elements do not exist, transmit the downlink signal related to the second RAT through the plurality of second resource elements.

For example, the instructions, when executed by the at least one processor individually or collectively, may cause the device to identify first index information for indicating the at least one resource element among the plurality of first resource elements. The instructions, when executed by the at least one processor individually or collectively, may cause the device to identify second index information for indicating the at least one resource element among the plurality of second resource elements.

For example, the second index information may correspond to the first index information in a case that the plurality of second resource elements correspond to the plurality of first resource elements.

For example, the second index information may be distinct from the first index information in a case that the plurality of second resource elements do not correspond to the plurality of first resource elements.

For example, the downlink signal related to the second RAT may comprise downlink data and at least one reference signal related to the second RAT.

For example, the instructions, when executed by the at least one processor individually or collectively, may cause the device to transmit the downlink signal related to the second RAT to a terminal based on repeated transmission.

For example, the plurality of second resource elements may be configured based on a 180 kHz bandwidth.

According to an embodiment, a method performed by a device of a base station may comprise determining overlapping resource elements where a plurality of first resource elements configured for a first radio access technology (RAT) and a plurality of second resource elements configured for a second RAT distinct from the first RAT overlap in a designated slot. The method may comprise determining at least one resource element for transmitting at least one reference signal related to the first RAT among the overlapping resource elements. The method may comprise allocating a downlink signal related to the second RAT to remaining resource elements excluding the at least one resource element among the plurality of second resource elements. The method may comprise transmitting the at least one reference signal related to the first RAT through the at least one resource element and transmitting the downlink signal related to the second RAT through the remaining resource elements excluding the at least one resource element among the plurality of second resource elements. The first RAT may include a new radio (NR). The second RAT may include narrow-band Internet of things (NB-IoT) or enhanced machine-type communication (eMTC).

For example, the at least one reference signal may comprise a channel state information reference signal (CSI-RS) related to mobility of a terminal.

For example, the at least one reference signal may be allocated based on a designated frequency interval in a system bandwidth.

For example, the method may comprise identifying that the overlapping resource elements where the plurality of first resource elements and the plurality of second resource elements overlap do not exist. The method may comprise, based on identifying that the overlapping resource elements do not exist, transmitting the downlink signal related to the second RAT through the plurality of second resource elements.

For example, the method may comprise identifying first index information for indicating the at least one resource element among the plurality of first resource elements. The method may comprise identifying second index information for indicating the at least one resource element among the plurality of second resource elements.

For example, the second index information may correspond to the first index information in a case that the plurality of second resource elements correspond to the plurality of first resource elements.

For example, the second index information may be distinct from the first index information in a case that the plurality of second resource elements do not correspond to the plurality of first resource elements.

For example, the downlink signal related to the second RAT may comprise downlink data and at least one reference signal related to the second RAT.

For example, the method may comprise transmitting the downlink signal related to the second RAT to a terminal based on repeated transmission.

For example, the plurality of second resource elements may be configured based on a 180 kHz bandwidth.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A device of a base station comprising:
a transceiver;
at least one processor comprising processor circuitry; and
memory comprising one or more storage media storing instructions; and
wherein the instructions, when executed by the at least one processor individually or collectively, cause the device to:
determine overlapping resource elements where a plurality of first resource elements configured for a first radio access technology (RAT) and a plurality of second resource elements configured for a second RAT distinct from the first RAT overlap in a designated slot,
determine at least one resource element for transmitting at least one reference signal related to the first RAT among the overlapping resource elements,
allocate a downlink signal related to the second RAT to remaining resource elements excluding the at least one resource element among the plurality of second resource elements, and
transmit the at least one reference signal related to the first RAT through the at least one resource element and transmit the downlink signal related to the second RAT through the remaining resource elements excluding the at least one resource element among the plurality of second resource elements.

2. The device of claim 1, wherein the at least one reference signal comprises a channel state information reference signal (CSI-RS) related to mobility of a terminal.

3. The device of claim 2, wherein the at least one reference signal is allocated based on a designated frequency interval in a system bandwidth.

4. The device of claim 1, wherein the instructions, when executed by the at least one processor individually or collectively, cause the device to:
identify that the overlapping resource elements where the plurality of first resource elements and the plurality of second resource elements overlap do not exist, and
based on identifying that the overlapping resource elements do not exist, transmit the downlink signal related to the second RAT through the plurality of second resource elements.

5. The device of claim 1, wherein the instructions, when executed by the at least one processor individually or collectively, cause the device to:
identify first index information for indicating the at least one resource element among the plurality of first resource elements, and
identify second index information for indicating the at least one resource element among the plurality of second resource elements.

6. The device of claim 5, wherein the second index information corresponds to the first index information in a case that the plurality of second resource elements correspond to the plurality of first resource elements.

7. The device of claim 5, wherein the second index information is distinct from the first index information in a case that the plurality of second resource elements do not correspond to the plurality of first resource elements.

8. The device of claim 1, wherein the downlink signal related to the second RAT comprises downlink data and at least one reference signal related to the second RAT.

9. The device of claim 1, wherein the instructions, when executed by the at least one processor individually or collectively, cause the device to transmit the downlink signal related to the second RAT to a terminal based on repeated transmission.

10. The device of claim 1, wherein the plurality of second resource elements are configured based on a 180 kHz bandwidth.

11. A method performed by a device of a base station, comprising:
determining overlapping resource elements where a plurality of first resource elements configured for a first radio access technology (RAT) and a plurality of second resource elements configured for a second RAT distinct from the first RAT overlap in a designated slot,
determining at least one resource element for transmitting at least one reference signal related to the first RAT among the overlapping resource elements,
allocating a downlink signal related to the second RAT to remaining resource elements excluding the at least one resource element among the plurality of second resource elements, and
transmitting the at least one reference signal related to the first RAT through the at least one resource element and transmitting the downlink signal related to the second RAT through the remaining resource elements excluding the at least one resource element among the plurality of second resource elements.

12. The method of claim 11, wherein the at least one reference signal comprises a channel state information reference signal (CSI-RS) related to mobility of a terminal.

13. The method of claim 12, wherein the at least one reference signal is allocated based on a designated frequency interval in a system bandwidth.

14. The method of claim 11, wherein the method further comprises:
identifying that the overlapping resource elements where the plurality of first resource elements and the plurality of second resource elements overlap do not exist, and
based on identifying that the overlapping resource elements do not exist, transmitting the downlink signal related to the second RAT through the plurality of second resource elements.

15. The method of claim 11, wherein the method further comprises:
identifying first index information for indicating the at least one resource element among the plurality of first resource elements, and
identifying second index information for indicating the at least one resource element among the plurality of second resource elements.
